# EUROPEAN PATENT SPECIFICATION

(11) **EP 2 570 283 B1**
(45) Date of publication and mention of the grant of the patent: **23.04.2014**
(21) Application number: 11181175.8
(22) Date of filing: 14.09.2011
(51) Int. Cl.: B60J 7/10

(54) **Utility vehicle**
Nutzfahrzeug
Véhicule utilitaire

(43) Date of publication of application: 20.03.2013
(73) Proprietor: Technische Universität Graz, 8010 Graz (AT)
(72) Inventor: Hirz, Mario, 8042 Graz (AT); Stadler, Severin, 5360 St. Wolfgang (AT)
(74) Representative: Hübscher, Helmut

(56) References cited:
- WO-A1-02/066286
- DE-U1- 9 213 206
- DE-U1-202006 001 735
- JP-A- 8 142 684
- US-A1- 2003 047 959

## Description

The invention relates to a utility vehicle comprising a structure, which receives a tarpaulin, made of lateral uprights, which are connected to one another by longitudinal and transverse spars and are adjustable in length.

Because of their aerodynamically unfavorable vehicle shape, utility vehicles have a comparatively high air resistance, which results in increased driving resistance and therefore increased fuel consumption in particular at the higher velocities occurring in long-distance travel. In order to minimize such losses, implementing the structure comprising an aerodynamically shaped roof has already been proposed (WO 2008/125863 A1), which not only results in a more complex roof construction, but rather also restricts the available cargo volume.

In order to make loading utility vehicles easier while utilizing the full cargo volume, raising the uprights of the structure, which are connected to one another by longitudinal and transverse spars to receive a tarpaulin, simultaneously via compressed air cylinders is known (DE9213206U1), in order to provide a larger room height for loading, so that room is provided for the free lift required when using forklifts. After the loading procedure, the structure is lowered by jointly resetting the uprights back to the permissible transport height of utility vehicles. The box shape of the structure, which is unfavorable for the driving resistance and is formed by the tarpaulin, is retained, however.

The invention is therefore based on the object of implementing a utility vehicle of the type described at the beginning in such a way that simple design conditions are provided, to reduce the driving resistance of utility vehicle as a function of the respective required cargo volume.

The invention achieves the stated object in that at least a part of the longitudinal spars are linked to the uprights, which are adjustable in length independently of one another.

Because of these precautions, for the case in which the cargo volume is not completely utilized, the roof area of the tarpaulin can be aerodynamically shaped in its longitudinal course in that, for example, the lateral uprights of the structure are increasingly shortened toward the rear structure end, so that the longitudinal spars which connect the uprights to one another may be adapted to an aerodynamically favorable course for the roof area of the tarpaulin because of their articulated connections.

Since a length equalization in the area of the longitudinal spars is required with a varying shortening of the lateral uprights, the longitudinal spars of the structure linked between the uprights can be set in their length, for example, by a telescopic spar implementation, which is not required, however.

The aerodynamic driving resistance of the structure of a utility vehicle is not only a function of the roof course, but rather also of the course of its side walls. In order that the possibility can be provided of also influencing the course of the side walls of the structure, at least a part of the uprights, which are opposite to one another in pairs, can be mounted so they are adjustable in the direction of the transverse spars, which are settable in their length. Through this adjustable mounting of the uprights, which are opposite to one another in pairs, a course of the lateral areas of the tarpaulin which converges toward the rear structure end can be achieved, in order to additionally reduce the driving resistance of utility vehicle.

So as not to have to link the transverse and longitudinal spars directly to the lateral uprights, the uprights can be provided with connecting parts for linking on the longitudinal and transverse spars, which is not only accompanied by a design simplification, but rather also provides the possibility of adapting the course of the roof area better to an aerodynamically favorable shape.

The object of the invention is shown for exemplary purposes in the drawing. In the figures:

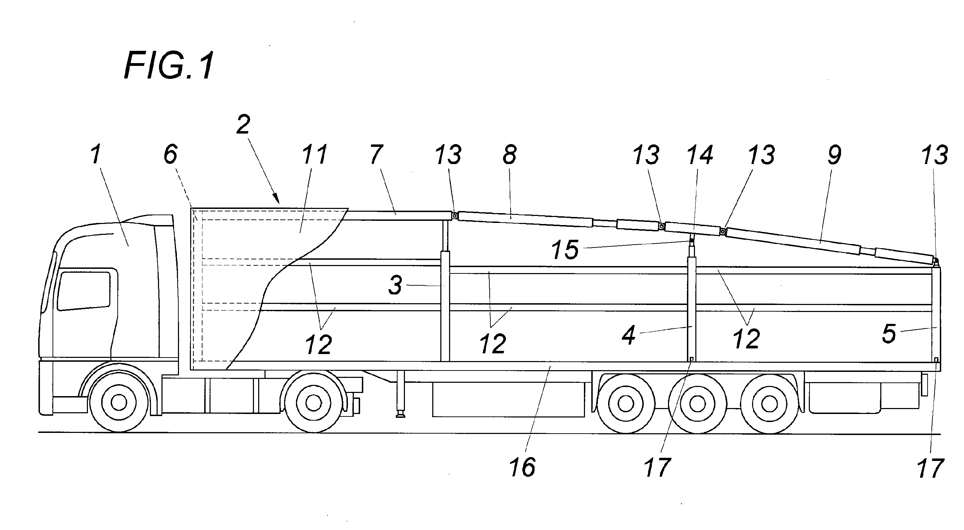

Figure 1 shows a partially cutaway side view of a utility vehicle according to the invention and

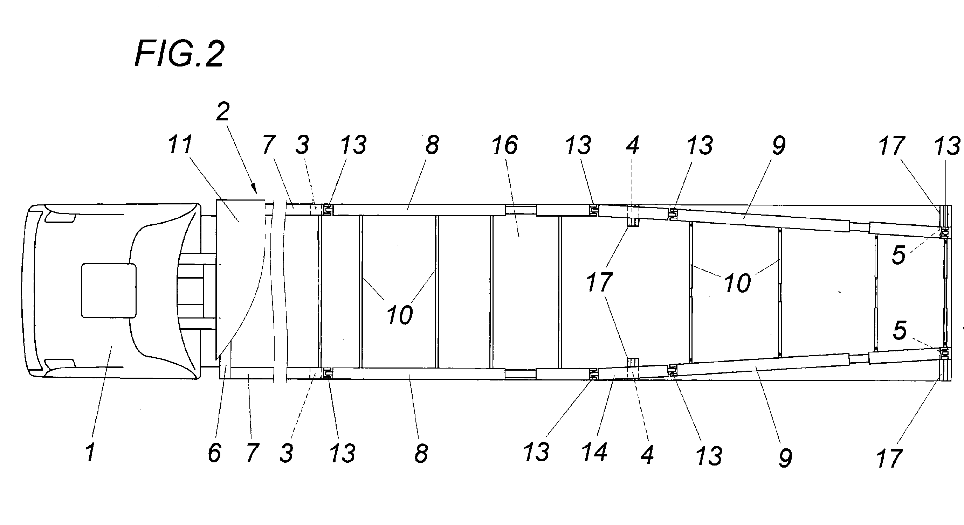

Figure 2 shows a top view of utility vehicle in an enlarged scale.

According to the illustrated exemplary embodiment, the utility vehicle 1 has a structure 2, which comprises lateral uprights 3, 4, 5 opposite to one another in pairs. The utility vehicle 1 is shown as a tractor with trailer, but this is not required. Longitudinal spars 7, 8, 9, which represent a receptacle for a tarpaulin 11 together with transverse spars 10, run between these uprights 3, 4, 5 and between the forward front wall 6 and the uprights 3. In addition, insert laths 12 can be inserted into corresponding pockets in a known way between the front wall 6 and uprights 3 and between uprights 3, 4, and 5. The uprights 3, 4, and 5 are each implemented as adjustable in length. For this purpose, the uprights might have molded tubes which are telescopically displaceable in one another, although the invention is not limited to this embodiment.

According to the illustrated exemplary embodiment, the longitudinal spars 8 and 9 are linked around transverse axes 13 on the uprights 3, 4, and 5, the linkage on the uprights 4 being performed via connecting parts 14, which are in turn carried by the uprights 4 so they are pivotable around a transverse axis 15.

For the case in which the required cargo volume permits at least partial reduction of the structure height, the uprights 4 and 5 can be reduced in their length, in order to allow an aerodynamically favorable course of the roof area of the tarpaulin 11. The length equalization of the longitudinal spars 8 and 9 required for this purpose must be considered accordingly. If these longitudinal spars 8, 9 are implemented as telescopically adjustable, advantageous design conditions can be ensured for this purpose. However, such a telescopic implementation is not required.

An additional improvement of the flow conditions can be achieved in that the structure 2 can be adjusted not only in height but rather also in width. For this purpose, the uprights 4 and 5 are mounted so they are displaceable transversely to the longitudinal axis of the structure 2 on or in the floor plate 16. The guides provided for this purpose are identified by 17. Such a transverse displacement of the uprights 4 and 5, which are opposite to one another in pairs, requires, however, that the transverse spars 10 also be implemented so they are adjustable in length in this area. In addition, the transverse displacement of the uprights 4, 5 requires an additional pivot capability of the longitudinal spars 8 and 9 and the connecting parts 14 around a vertical axis. This can be ensured in a simple way by a ball-and-socket joint implementation in the area of the transverse axes 13 and 15. In addition, the transverse spars 10, which are adjustable in length, are to be linked accordingly to the longitudinal spars 9.

## Claims

1. A utility vehicle (1) comprising a structure (2), which receives a tarpaulin (11), made of lateral uprights (3, 4, 5), which are connected to one another by longitudinal and transverse spars (7, 8, 9, 10) and are adjustable in length, **characterized in that** the uprights (3, 4, 5) are adjustable in length independently of one another and that at least a part of the longitudinal spars (7, 8, 9) are linked to that uprights (3, 4, 5) around transverse axes (13).

2. The utility vehicle (1) according to Claim 1, **characterized in that** the longitudinal spars (8, 9) are settable in their length.

3. The utility vehicle (1) according to Claim 1 or 2, **characterized in that** at least a part of the uprights (3, 4, 5), which are opposite to one another in pairs, are mounted so they are adjustable in the direction of the transverse spars (10), which are settable in their length.

4. The utility vehicle (1) according to one of Claims 1 to 3, **characterized in that** the uprights (4) carry connecting parts (14) for linking on the longitudinal spars (8, 9).

## Patentansprüche

1. Nutzfahrzeug (1) mit einem eine Abdeckplane (11) aufnehmenden Aufbau (2) aus seitlichen, miteinander durch Längs- und Querholme (7, 8, 9, 10) verbundenen, der Länge nach verstellbaren Stehern (3, 4, 5), **dadurch gekennzeichnet, dass** zumindest ein Teil der Längsholme (7, 8, 9) um Querachsen (13) an den voneinander unabhängig der Länge nach verstellbaren Stehern (3, 4, 5) angelenkt ist.

2. Nutzfahrzeug (1) nach Anspruch 1, **dadurch gekennzeichnet, dass** die Längsholme (8, 9) in ihrer Länge einstellbar sind.

3. Nutzfahrzeug (1) nach Anspruch 1 oder 2, **dadurch gekennzeichnet, dass** zumindest ein Teil der einander paarweise gegenüberliegenden Steher (3, 4, 5) in Richtung der in ihrer Länge einstellbaren Querholme (10) verstellbar gelagert ist.

4. Nutzfahrzeug (1) nach einem der Ansprüche 1 bis 3, **dadurch gekennzeichnet, dass** die Steher (4) Verbindungsstücke (14) zur Anlenkung der Längsholme (8, 9) tragen.

## Revendications

1. Véhicule utilitaire (1) comprenant une structure (2), qui reçoit une bâche (11), constituée de montants latéraux (3, 4, 5) qui sont reliés les uns aux autres par des barres (7, 8, 9, 10) longitudinales et transversales et qui sont réglables en longueur, **caractérisé en ce que** les montants (3, 4, 5) sont réglables en longueur indépendamment les uns des autres et **en ce qu'**au moins une partie des barres longitudinales (7, 8, 9) sont reliées à ces montants (3, 4, 5) autour d'axes transversaux (13).

2. Véhicule utilitaire (1) selon la revendication 1, **caractérisé en ce que** les barres longitudinales (8, 9) sont réglables en longueur.

3. Véhicule utilitaire (1) selon la revendication 1 ou 2, **caractérisé en ce qu'**au moins une partie des montants (3, 4, 5), qui sont opposés par paires les uns aux autres, sont montés de manière à être réglables dans le sens des barres transversales (10) qui sont réglables en longueur.

4. Véhicule utilitaire (1) selon l'une quelconque des revendications 1 à 3, **caractérisé en ce que** les montants (4) supportent des raccords (14) pour établir une liaison sur les barres longitudinales (8, 9).
